**Europäisches Patentamt**

**European Patent Office**

**Office européen des brevets**

(19)

(11) Veröffentlichungsnummer: **0 021 297**
A1

(12) # EUROPÄISCHE PATENTANMELDUNG

(21) Anmeldenummer: **80103334.1**

(22) Anmeldetag: **14.06.80**

(51) Int. Cl.³: **B 41 F 13/18,** F 16 C 13/00

(30) Priorität: **27.06.79 DE 2925888**

(43) Veröffentlichungstag der Anmeldung: **07.01.81**
Patentblatt 81/1

(84) Benannte Vertragsstaaten: **AT BE CH DE FR GB IT LI LU
NL SE**

(71) Anmelder: **Felix Böttcher GmbH & Co. KG, Stolberger
Strasse 351-353, D-5000 Köln 41 (DE)**

(72) Erfinder: **Otte, Karl Hermann, Luxemburger Strasse 34,
D-5350 Euskirchen 17 (DE)**

(74) Vertreter: **Eggert, Hans-Gunther, Dr.,
Raederscheidtstrasse 1, D-5000 Köln 41 (DE)**

(54) **Walze mit Durchbiegungsausgleich.**

(57)    Um bei einer Walze für die Druckbehandlung von
Bahnen, insbesondere einem Presseur, einen wirksamen
Biegeausgleich auch bei variabler Anpressung sowie bei
minimaler Wartung zu ermöglichen, ist auf der Achse (1)
eine Vielzahl von Elektromagneten (2) angeordnet, denen
jeweils ein Rotor (4) im Mantel (5) sowie ein Sensor (7) zugeordnet ist, wobei die Erregung der einzelnen Elektromagneten (2) über die zugeordneten Sensoren (7) steuerbar
ist.

EP 0 021 297 A1

ACTORUM AG

B e s c h r e i b u n g:

Die Erfindung betrifft eine Walze mit Durchbiegungsausgleich für die Druckbehandlung von Bahnen, insbesondere
einen Presseur, bestehend aus einer feststehenden Achse,
um die ein gegebenenfalls mit einem Bezug versehener
Mantel mit Abstand umlaufend angeordnet ist, und Einrichtungen zum Verformen des Mantels in Bezug auf einen
gewünschten Anpreßdruck.

Insbesondere im Druckmaschinenbau, vorzugsweise bei Tiefdruckmaschinen, werden für den Druckvorgang zwei Zylinder
gegeneinander gepreßt. Wenn man einen Zylinder, der an seinen Walzenenden in Lagern gelagert ist, gegen einen gleichartig gelagerten, zweiten Zylinder preßt, biegen sich die
Zylinder durch. Die Durchbiegung ist in der Mitte stärker
als an den Enden. Das bewirkt, daß der Druck zwischen den
Zylindern in der Mitte kleiner wird als an den Enden der
Zylinder. Um ein gutes Druckresultat zu erhalten, ist es
wünschenswert, daß der Anpreßdruck auf der ganzen Berührungslinie gleichmäßig erfolgt.

Ein wichtiger Bestandteil im Druckmaschinenkonzept ist der
Presseur. Seine Aufgabe besteht darin, durch entsprechende
Anpressung des Bedruckstoffes an einen Formzylinder einen
möglichst optimalen Ausdruck zu erreichen.

Es sind eine Reihe von Lösungen bekannt, mit denen der
Durchbiegung von Walzen entgegengewirkt wird.

Die bekannte Verwendung eines Stützpresseurs hat den Nachteil, daß der Presseurbelag bei jeder Umdrehung zweimal einer Walkung unterliegt, so daß die Gefahr besteht, daß der Presseur den "Wärmetod" stirbt, zumal man etwa 800 U/min anstrebt.

Auch die Verwendung von bombierten Walzen ist bekannt, jedoch ist ein Ausgleich der Durchbiegung nur für eine schon bei der Berechnung festzulegende Anstellkraft möglich, den im Betrieb erforderlichen Veränderungen wird eine bombierte Walze nicht gerecht.

Ferner sind Walzen bekannt, die einen Mantel aufweisen, der die Achse nur im Mittelteil durchführt und an den Enden absteht, vergleiche CH-PS 456 649, derartige Walzen sind jedoch sehr teuer und bedürfen einer dauernden Wartung.

Abgesehen davon sind Walzen der eingangs genannten Art beispielsweise aus der DE-AS 22 45 597 oder der CH-PS 590 732 bekannt, bei denen die Einrichtungen zum Verformen des Mantels aus hydraulisch betätigten Kolben als Stützelemente bestehen, wodurch sich jedoch ein sehr komplizierter Aufbau bei entsprechender Störanfälligkeit ergibt.

Aufgabe der vorliegenden Erfindung ist es, eine Walze der eingangs genannten Art zu schaffen, die einen wirksamen Biegeausgleich auch bei variabler Anpressung sowie bei minimaler Wartung ermöglicht.

Diese Aufgabe wird dadurch gelöst, daß auf der Achse eine Vielzahl von Elektromagneten angeordnet ist, denen jeweils ein Rotor im Mantel sowie ein Sensor zugeordnet ist, wobei die Erregung der einzelnen Elektromagnete über die zugeordneten Sensoren steuerbar ist.

0021297

Hierdurch ergibt sich nicht nur der gewünschte Biegeausgleich mit variablen Andruck (etwa bei Formatwechsel), sondern auch Reibungsfreiheit, Sauberkeit (Öl- oder Preßluft ist nicht notwendig) und schnellste Ansprechbarkeit.

Zwar ist es bekannt, aktive Magnetlager zur Lagerung von Wellen oder dergleichen zu verwenden, vergleiche "Maschinenmarkt", Würzburg, 84 (1978) 94, Seite 1922 bis 1925, jedoch dienen diese dazu, einen konstanten Lagerspalt aufrecht zu erhalten, d.h. Rotor und Stator besitzen eine gemeinsame Mittelachse und dienen als Ersatz für Wälzlager, während im vorliegenden Fall der die Rotoren aufnehmende Mantel in den verschiedenen Bereichen in Längsrichtung der Walze gesehen um eine andere Achse als die Mittelachse der Achse in diesem Bereich rotieren soll, um den gewünschten Anpreßdruck zu liefern. Zweckmäßigerweise sind die Elektromagnete und die zugeordneten Rotoren jeweils im gleichen Abstand zueinander in Richtung der Längsachse der Walze angeordnet.

Zwischen dem Mantel und der Achse kann ein Axialmagnetlager angeordnet sein, um ein seitliches Wandern des Mantels gegenüber der Achse zu vermeiden.

Zweckmäßigerweise befindet sich auf der Achse ein Notlager zum Lagern des Mantels, das mit dem Mantel in Eingriff gelangt, wenn die Stromzuführung zu den Elektromagneten unterbrochen wird, jedoch ansonsten mit geringem Abstand zu dem Mantel angeordnet ist.

Der Mantel kann aus Metall bestehen, jedoch kann er auch zur Erhöhung seiner Flexibilität aus Gummi oder Kunststoff bestehen, in welches Material die Rotoren, die den Elektromagneten zugeordnet sind, eingebettet sind. Die Rotoren können auch selbst aus einer z.B. mit Magnetpulver gefüllten Kautschuk- oder Kunststoffmischung bestehen.

Die Sensoren können insbesondere induktiv arbeitende Sensoren sein, wie sie bei aktiven Magnetlagern verwendet werden.

Die Erfindung wird nachfolgend anhand des in den beigefügten Abbildungen teilweise und schematisch im Schnitt dargestellten Ausführungsbeispiels näher erläutert.

Der dargestellte Presseur besteht aus einer Achse 1, auf der eine Vielzahl von Elektromagneten 2 mit Abstand zueinander angeordnet sind. Die Elektromagneten 2 bestehen jeweils aus einem Paket 3 von Eisenblechringen, aus denen die gewünschte Polanzahl beispielsweise herausgestanzt ist, und einer Spulenwicklung 4.

Die Elektromagneten 2 bilden jeweils einen Stator zugehörig zu jeweils einem Rotor, der aus einem Paket 3a aus Eisenblechringen besteht, die benachbart und mit Abstand zu den Paketen 3 sowie mit Abstand zueinander an der Innenseite eines Mantels 5 angeordnet sind. Der Mantel 5 umgibt die Achse 1 und die Elektromagneten 2 mit Abstand und ist um diese drehbar angeordnet, wobei sich ein ringförmiger Luftspalt zwischen dem Mantel 5 und der Achse 1 mit den Elektromagneten 2 befindet. Auf seiner Außenseite besitzt der Mantel 5 einen Presseurbezug 6.

Zwischen jeweils zwei auf diese Weise aus den Elektromagneten 2 und den Paketen 4 gebildeten Elektromotoren befinden sich Sensoren 7. Hierbei handelt es sich vorzugsweise um induktive Sensoren 7, die ebenfalls aus einem Paket 8 von Eisenblechringen auf der Achse 1 mit einer zugehörigen Spulenwicklung 9 als Stator und einem Paket 10 von Eisenblechringen als Rotor an der Innenseite des Mantels 5 bestehen. Die Sensoren 7 besitzen jedoch wesentlich mehr Pole und Wicklungen am Stator als die Elektromagneten 2, während ihre Pakete 8, 10 aus Eisenblechringen in der Regel wesentlich weniger Ringe als die Pakete 3, 4 der Elektromagnete 2 aufweisen.

Der Mantel 5 ist stirnseitig mit einem Ring 11 versehen, der
mit geringem Abstand zu einem auf der Achse 1 sitzenden
Notlager 12 angeordnet ist und beim Stromabschalten mit diesem
in Eingriff gelangt.

An den Enden der Achse 1 befinden sich Ringflansche 13, die
auf ihrer dem Mantel 5 zugewandten Seite axiale Magnetlager
14 aufweisen, deren zugehörige rotierende Teile in dem Ring
11 angeordnet sein können. Der Ring 11 kann aber gegebenenfalls
auch selbst als Rotor für das axiale Magnetlager 14 dienen
und gegebenenfalls mit entsprechenden Einschnitten versehen
sein. Die Magnetlager 14 dienen dazu, ein seitliches Wandern
des Mantels 5 in Bezug auf die Mittelwelle 1 zu verhindern.

Der Mantel 5 kann aus Metall bestehen, jedoch ist auch Gummi
oder Kunststoff geeignet, wobei die Pakete 4, 10 dann in dieses Material eingepackt sein können.

Bei einer derartigen Walze, die auch für andere Zwecke, etwa
für die Druckpartie bei der Papierherstellung oder für Textilausrüstungsmaschinen verwendbar ist, entfällt die Walkarbeit, denen der Mantel 5 und der Bezug normalerweise
ausgesetzt sind, weil keine Verformung stattfindet und überall gleicher Druck herrscht. Die Sensoren 7 geben ein Signal
entsprechend der Durchbiegung der Achse 1, d.h. entsprechend
dem Abstand zwischen der Achse 1 und dem Mantel 5, das dazu verwendet wird, die Elektromagneten 2 so mit Strom zu
beaufschlagen, daß immer ein bestimmter Anpreßdruck gewährleistet ist. Die zugehörige Elektronik ist nicht dargestellt.

Felix Böttcher GmbH & Co., Stolberger Straße 351-353,
5000 Köln 41

Walze mit Durchbiegungsausgleich

P a t e n t a n s p r ü c h e

1. Walze mit Durchbiegungsausgleich für die Druckbehandlung von Bahnen, insbesondere Presseur, bestehend aus
einer feststehenden Achse, um die ein gegebenenfalls
mit einem Bezug versehener Mantel mit Abstand umlaufend
angeordnet ist, und Einrichtungen zum Verformen des
Mantels in Bezug auf einen gewünschten Anpreßdruck,
dadurch gekennzeichnet, daß auf der Achse (1) eine
Vielzahl von Elektromagneten (2) angeordnet ist, denen
jeweils ein Rotor (4) im Mantel (5) sowie ein Sensor
(7) zugeordnet ist, wobei die Erregung der einzelnen
Elektromagneten (2) über die zugeordneten Sensoren (7)
steuerbar ist.

2. Walze nach Anspruch 1, dadurch gekennzeichnet, daß
die Elektromagneten (2) und die zugeordneten Rotoren
(4) im gleichen Abstand zueinander in Richtung der
Längsachse der Walze angeordnet sind.

3. Walze nach Anspruch 1 oder 2, dadurch gekennzeichnet,
daß zwischen dem Mantel (5) und der Achse (1) Axialmagnetlager (14) angeordnet sind.

4. Walze nach einem der Ansprüche 1 bis 3, dadurch gekennzeichnet, daß ein Notlager (12) auf der Achse (1) zum
Lagern des Mantels (5) beim Stromabschalten vorgesehen
ist.

5. Walze nach einem der Ansprüche 1 bis 4, dadurch gekennzeichnet, daß der Mantel (5) aus Gummi oder Kunststoff
besteht, in welches Material die Rotoren (4) eingebettet sind.

6. Walze nach einem der Ansprüche 1 bis 5, dadurch gekennzeichnet, daß die Sensoren (7) induktiv arbeiten.

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - A - 2 800 960 (SOCIETE EUROPEENNE DE PROPULSION) <br> * Seite 4, Zeile 4 bis Seite 5, Zeile 5; Figur 1 * <br><br> -- | 1,3,6 |
| A | DE - A - 1 761 641 (ESCHER WYSS) <br> * Das ganze Dokument * <br><br> ---- | 1 |

**KLASSIFIKATION DER ANMELDUNG (Int. Cl.³)**

B 41 F 13/18
F 16 C 13/00

**RECHERCHIERTE SACHGEBIETE (Int. Cl.³)**

B 41 F
B 65 G
F 16 C

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

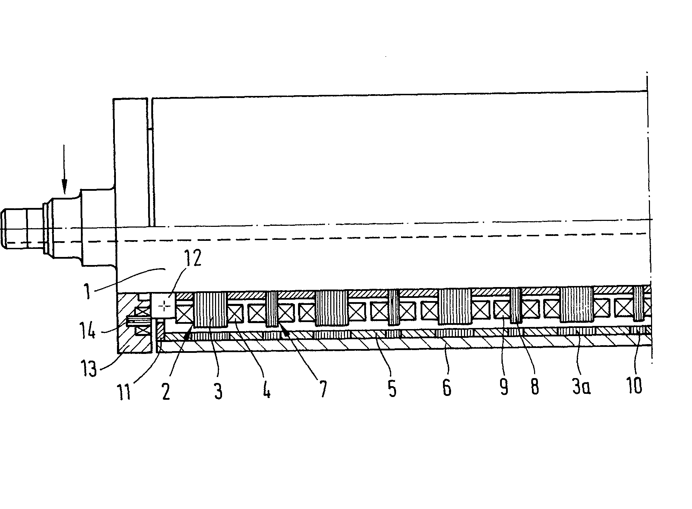

| Recherchenort | Abschlußdatum der Recherche | Prüfer |
|---|---|---|
| Den Haag | 23-09-1980 | LONCKE |

EPA form 1503.1   06.78